# EUROPEAN PATENT SPECIFICATION

(11) **EP 2 104 592 B1**
(45) Date of publication and mention of the grant of the patent: **02.10.2013**
(21) Application number: 08705194.2
(22) Date of filing: 14.01.2008
(51) Int. Cl.: B25B 21/00, B23B 45/02, B25B 23/147, B25F 5/00, B25B 23/14

(54) **PORTABLE POWER TOOL WITH WIRELESS COMMUNICATION WITH A STATIONARY CONTROL UNIT**
TRAGBARES ELEKTROWERKZEUG MIT DRAHTLOSER KOMMUNIKATION ÜBER EINE STATIONÄRE STEUEREINHEIT
OUTIL ÉLECTRIQUE PORTATIF EN COMMUNICATION SANS FIL AVEC UNE UNITÉ DE COMMANDE IMMOBILE

(30) Priority: 15.01.2007 SE 0700064
(43) Date of publication of application: 30.09.2009
(73) Proprietor: Atlas Copco Industrial Technique AB, 105 23 Stockholm (SE)
(72) Inventor: ÖSTLING, Carl, Gunnar, S-131 34 Nacka (SE)
(86) International application number: PCT/SE2008/000021
(87) International publication number: WO 2008/088266

(56) References cited:
- WO-A1-01/73917
- WO-A1-2007/058596
- DE-C1- 10 127 821
- JP-A- 06 312 381
- JP-A- 08 118 251
- JP-A- 2002 018 744
- US-A1- 2004 144 552

## Description

The invention relates to a portable power tool for performing working operations according to certain operation parameter values, wherein desired parameter values and obtained working operation results are communicated between the power tool and a stationary process control unit via a wireless communication system.

Power tools of this type, mainly battery powered power wrenches with no cable connection with the process control unit, have a growing application in assembly line operations, for instance in assembling of automobile bodies and the like. This type of tools has become increasingly more advanced with on-board operation control means and wireless transmission of operation data between the on-board operation control means and a stationary process control unit. This communication is performed via different wireless systems, like W-lan, Bluetooth etc. according to what particular system is preferred by the actual operator.

WO 2007/058596 discloses a battery powered power wrench tool according to the preamble of claim 1 of this type where an upgrade module is provided. The upgrade module is designed to meet specific demands of a particular tool or application. The module contains different types of upgrades with different operational properties, like a transceiver for radio communication, positioning means for determining the actual tool position relative a working object or extra warning lights and/or buzzers to inform the operator of certain operation conditions.

A problem concerned with this type of power tool is that the tools produced today are specifically designed to operate according to one specific communication system, and if a tool has to be adapted to another communication system there is required a difficult and time consuming operation to redesign the tool, i.e. changing the transmitting/receiving means according to one system originally fitted to the power tool to another transmitting/receiving means. That operation normally requires a certain amount of work for dismantling and reassembling the power tool or the module to get access to and remove the transmitting/receiving means and to enable fitting of an alternative equipment. This is a tricky and time consuming operation which causes undesired extra costs to the operator.

An alternative way to change communication system is to exchange the entire power tool for another tool provided with the desired communication system. This also means an increased cost, because the power tool supplier has to specifically design a number of power tool models with different communication systems, which adds to the costs for keeping an increased number of tools in stock.

The present invention provides a power tool according to claim 1 adaptable for wireless communication with a stationary process control unit in accordance with different communication systems in that the wireless transmitting/receiving means on-board the power tool is easily and readily exchanged for a transmitting/receiving means operating in accordance with an alternative communication system.

Further characteristic features and advantages of the invention will appear from the following specification and claims.

A preferred embodiment of the invention is below described in detail with reference to the accompanying drawing.

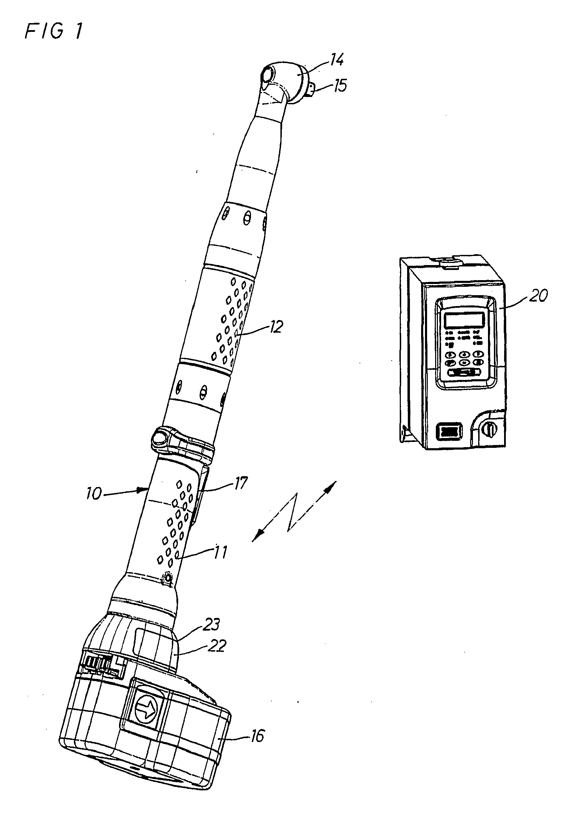

In the drawing
Fig. 1 shows a perspective view of a power tool according to the invention.

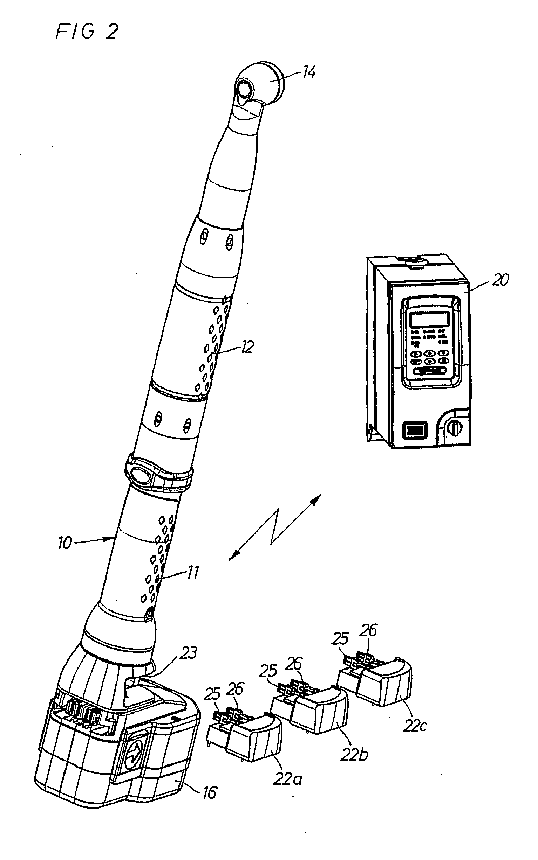

Fig. 2 shows a perspective view of the power tool in Fig. 1 illustrating alternative separate communication modules.

The power tool illustrated in the drawings is a battery powered angle nutrunner which comprises a housing 10 formed with external grip sections 11, 12 for manual support of the tool during work operations. At its forward end the housing 10 is provided with an angle head 14 with an output shaft 15, and at its rear end the housing 10 carries an exchangeable and rechargeable battery unit 16. Inside the housing 10 there is supported an electric motor which is drivingly connected to the output shaft 15, and a key 17 is provided on the housing 10 for the operator to initiate the power supply to the motor.

The power tool also comprises an on-board operation control means (not illustrated) for controlling the operation of the motor in accordance with certain parameter values, like target torque level, and a wireless communication system is arranged to communicate operation data between the power tool and a stationary control unit 20. This communication system comprises a transmitter/receiver on-board the power tool and a transmitter/receiver in the stationary control unit 20, both operating according to the same communication system, for instance Bluetooth, W-lan etc. The results of each performed screw joint tightening processe, like the actually obtained torque level, the lapsed rotation angle of the output shaft during the final tightening, and other data like for instance the remaining battery capacity, motor temperature etc. are communicated back to the control unit 20, whereas power tool operation data as tightening parameter values to be used during tightening of a certain screw joint are communicated from the control unit 20 to the power tool.

The communication means comprising a transmitter/receiver on-board the power tool has the form of a separate communication module 22 which is connected to the tool via a docking portion 23 on the housing 10. The latter has the form of a pocket in which the main part of the communication module 22 is received, and the communication module 22 and the docking portion 23 comprise matching connection means 25,26 for electrically connect the communication module 22 to the on-board operation control means as the communication module 22 is docked to the power tool. The connection means 25,26 on the communication module 22 comprises a pair of rigidly attached connector elements.

The communication module 22 is one of a number of interchangeable communication modules 22 a-c all comprising means for wireless communication according to different communication systems, like Bluetooth, W-lan etc. This means that one power tool can easily be adapted to different communication systems, just by exchanging communication module. No dismantling/reassembly work is needed, and the number of power tool models kept available to the customers could be minimized. It is crucial though that the alternative communication modules 22a-c comprise identical connection means 25,26 for co-operation with the connection means of the docking portion 23.

It is to be considered that the embodiments of the invention are not limited to the illustrated and described example but may be freely varied within the scope of the claims. Accordingly, the docking portion 23 on the power tool housing 10 may have other forms than a pocket, and the connection means between the communication module 22 and the docking portion 23 may have different forms, like male/female plug/jack type or sheet metal contact strips.

## Claims

1. Portable power tool having means for wireless communication with a stationary process control unit (20), comprising a housing (10), a motor, an on-board operation control means, and a wireless communication means for communicating tool operation data between the on-board control means and the stationary process control unit, wherein the on-board wireless communication means is formed as a separate communication module (22a-c), and a docking portion (23) is formed on the housing (10) for receiving and firmly retaining the communication module (22a-c), the docking portion (23) and the communication module (22a-c) have matching electric connection means to be interengaged as the communication module (22a-c) is received by said docking portion (23), thereby connecting the communication module (22a-c) with the on-board operation control means, **characterized in that**,
the separate communication module (22a-c) is one of a number of interchangeable communication modules all having identical connection means (25,26) but comprising communication means for operation according to different wireless communication systems, such that the portable power tool may be adapted to different wireless communication systems by interchanging communication modules.

2. Power tool according to claim 1, wherein the docking portion (23) is formed as a pocket for receiving at least partly the communication module (22a-c), and the pocket is provided with the connection means for engaging the connection means on the communication module (22a-c).

3. Power tool according to claim 1 or 2,
wherein the connection means on the communication module (22a-c) comprises a pair of rigidly attached connector elements (25,26).

## Patentansprüche

1. Tragbares Elektrowerkzeug mit Mitteln für die drahtlose Kommunikation mit einer stationären Prozesssteuereinheit (20), umfassend ein Gehäuse (10), einen Motor, ein eingebautes Betriebssteuermittel und ein Drahtloskommunikationsmittel zum Übertragen von Werkzeugbetriebsdaten zwischen dem eingebauten Steuermittel und der stationären Prozesssteuereinheit, wobei das eingebaute Drahtloskommunikationsmittel als separates Kommunikationsmodul (22a-c) ausgebildet ist und ein Ankopplungsabschnitt (23) an dem Gehäuse (10) ausgebildet ist, um das Kommunikationsmodul (22a-c) aufzunehmen und festzuhalten, der Ankopplungsabschnitt (23) und das Kommunikationsmodul (22a-c) passende elektrische Anschlussmittel aufweisen, um ineinanderzugreifen, wenn das Kommunikationsmodul (22a-c) von dem Ankopplungsabschnitt (23) aufgenommen ist, wodurch das Kommunikationsmodul (22a-c) mit dem eingebauten Betriebssteuermittel verbunden wird,
**dadurch gekennzeichnet, dass**
es sich bei dem separaten Kommunikationsmodul (22a-c) um eins von mehreren austauschbaren Kommunikationsmodulen handelt, die alle identische Anschlussmittel (25, 26) aufweisen, jedoch Kommunikationsmittel für den Betrieb gemäß unterschiedlichen Drahtloskommunikationssystemen umfassen, sodass das tragbare Elektrowerkzeug durch den Austausch von Kommunikationsmodulen an unterschiedliche Drahtloskommunikationssysteme angepasst werden kann.

2. Elektrowerkzeug nach Anspruch 1, wobei der Ankopplungsabschnitt (23) als Aussparung zum mindestens teilweise Aufnehmen des Kommunikationsmoduls (22a-c) geformt ist, und die Aussparung mit den Anschlussmitteln für den Eingriff mit den Anschlussmitteln an dem Kommunikationsmodul (22a-c) versehen ist.

3. Elektrowerkzeug nach Anspruch 1 oder 2, wobei das Anschlussmittel an dem Kommunikationsmodul (22a-c) ein Paar starr angebrachter Anschlusselemente (25, 26) umfasst.

## Revendications

1. Outil électrique portatif présentant des moyens pour la communication sans fil avec une unité de commande de processus (20) immobile, comprenant un boîtier (10), un moteur, un moyen de commande de fonctionnement intégré, et un moyen de communication sans fil pour communiquer des données de fonctionnement d'outil entre le moyen de commande intégré et l'unité de commande de processus immobile, dans lequel le moyen de communication sans fil intégré est formé en tant que module de communication (22a-c) séparé, et une partie d'accueil (23) est formée sur le boîtier (10) pour recevoir et retenir fermement le module de communication (22a-c), la partie d'accueil (23) et le module de communication (22a-c) présentent des moyens de connexion électrique assortis pour être mis en prise les uns avec les autres lorsque le module de communication (22a-c) est reçu par ladite partie d'accueil (23), connectant ainsi le module de communication (22a-c) au moyen de commande de fonctionnement intégré,
**caractérisé en ce que**
le module de communication (22a-c) séparé est l'un de plusieurs modules de communication échangeables présentant tous des moyens de connexion identiques (25, 26) mais comprenant des moyens de communication pour un fonctionnement selon différents systèmes de communication sans fil, de sorte que l'outil électrique portatif peut être adapté à différents systèmes de communication sans fil en échangeant des modules de communication.

2. Outil électrique selon la revendication 1, dans lequel la partie d'accueil (23) est formée en tant qu'évidement pour recevoir au moins partiellement le module de communication (22a-c), et l'évidement est pourvu des moyens de connexion pour venir en prise avec les moyens de connexion sur le module de communication (22a-c).

3. Outil électrique selon la revendication 1 ou 2, dans lequel le moyen de connexion sur le module de communication (22a-c) comprend une paire d'éléments de connecteur (25, 26) fixés de manière rigide.
